# EUROPEAN PATENT APPLICATION

(11) **EP 4 734 179 A1**
(43) Date of publication of application: **29.04.2026**
(21) Application number: 24209151.0
(22) Date of filing: 28.10.2024
(51) Int. Cl.: H01M 4/38, H01M 4/60, H01M 4/62, H01M 4/66, H01M 10/052, H01M 10/0568, H01M 10/0569, H01M 10/44, H01M 4/02

(54) **HIGH-PERFORMANCE ORGANOSULFUR CATHODE MATERIALS FOR LITHIUM-SULFUR BATTERIES**

(71) Applicant: Universität Stuttgart, 70174 Stuttgart (DE)
(72) Inventor: Buchmeiser, Michael, 73630 Remshalden (DE); Muduli, Sadananda, 752085 Nayagarh (IN)
(74) Representative: Meissner Bolte Partnerschaft mbB

(57) **Abstract**

The current invention is concerned with sulfurized vinyl aromatic polymers including sulfurized poly(styrene) (SPS) and sulfurized poly(vinylpyridine) (SPVP) and their use as cathode active materials for lithium-sulfur (Li-S) batteries. Respective Li-S batteries are fabricated from cathodes using SPS and SPVP, respectively, a lithium metal foil anode, an electrolyte, and a separator. The current invention is further concerned with cathodes, which comprise respective sulfurized vinyl aromatic polymers, electrochemical cells, which comprise respective cathodes and batteries and battery packs, which comprise respective electrochemical cell, as well as the use of the batteries and battery packs for energy storage.

## Description

The current invention concerns sulfurized vinyl aromatic polymers and in particular sulfurized poly(styrene) (SPS) and sulfurized poly(vinylpyridine) (SPVP) as cathode active materials for lithium-sulfur (Li-S) batteries. With these polymers, Li-S cells with a lithium metal foil anode, an electrolyte, and a separator were prepared. The respective Li-S cells possess high capacity, good rate capability, and long-term cycling stability. The sulfurized vinyl aromatic polymers of present invention can be used in batteries, battery packs, and other electrochemical devices for use in stationary equipment, portable devices, electric vehicles, uninterruptable power supply (UPS) power backup, and off-grid energy storage applications.

### State of Art

Because of their high energy density, Li-ion batteries (LIBs) are currently used in portable devices, in the automotive industry, for large-scale energy storage, and in stationary equipment (A. Rosenman, E. Markevich, G. Salitra, D. Aurbach, A. Garsuch, F.F. Chesneau, Adv. Energy Mater., 2015, 5, 1500212; A. Benítez, P. Márquez, M.Á. Martin, A. Caballero, ChemSusChem, 2021, 14, 3915-3925). The main limiting factor in terms of energy density in Li-ion batteries is the cathode, where the discharge capacity of the existing cathode materials (LiCoO₂, LiNMC, LiNCO, etc.) is limited by their theoretical capacity. Also, the raw materials are not cost-effective; additionally, nickel and cobalt have adverse effects on the environment (H.J. Peng, J.Q. Huang, X.B. Cheng, Q. Zhang, Adv. Energy Mater., 2017, 7, 1700260; A. Rosenman, E. Markevich, G. Salitra, D. Aurbach, A. Garsuch, F.F. Chesneau, Adv. Energy Mater., 2015, 5, 1500212; X. Wang, Y. Qian, L. Wang, H. Yang, H. Li, Y. Zhao, T. Liu, Adv. Funct. Mater., 2019, 29, 1902929).

Lithium-sulfur batteries hold great promise for next-generation energy storage devices due to their high abundance, cost-effectiveness, non-toxicity, and high theoretical capacity (1675 mAh g⁻¹) for sulfur (A. Rosenman, E. Markevich, G. Salitra, D. Aurbach, A. Garsuch, F.F. Chesneau, Adv. Energy Mater., 2015, 5, 1500212; X. Wang, Y. Qian, L. Wang, H. Yang, H. Li, Y. Zhao, T. Liu, Adv. Funct. Mater., 2019, 29, 1902929). However, the available Li-S batteries suffer from disadvantages like pulverization of the cathode materials due to volume expansion and show the polysulfide shuttle effect, which together significantly affect both battery stability and durability (A. Benítez, P. Márquez, M.Á. Martin, A. Caballero, ChemSusChem, 2021, 14, 3915-3925; H.J. Peng, J.Q. Huang, X.B. Cheng, Q. Zhang, Adv. Energy Mater., 2017, 7, 1700260; A. Rosenman, E. Markevich, G. Salitra, D. Aurbach, A. Garsuch, F.F. Chesneau, Adv. Energy Mater., 2015, 5, 1500212).

To address these issues, a series of modifications have been implemented in the cell configuration, including alterations to the cathode, separator, electrolyte, and anode. These variations aim to enhance the electrochemical performance by mitigating the shuttle effect through the use of physisorption, chemisorption, and catalytic effects (S. Li, W. Zhang, J. Zheng, M. Lv, H. Song, L. Du, Adv. Energy Mater., 2021, 11, 2000779; Y. Zheng, S. Zheng, H. Xue, H. Pang, J. Mater. Chem. A, 2019, 7, 3469-3491). The modifications to the cathode are carried out by utilizing materials that are capable of housing sulfur, thereby increasing conductivity and dampening changes in sulfur volume during charge/discharge (A. Benítez, P. Márquez, M.Á. Martin, A. Caballero, ChemSusChem, 2021, 14, 3915-3925; I. Marri, Z. Edfouf, A. Caballero, A.Y. Tesio, J. Energy Storage, 2024, 82, 110518). Among these materials, porous carbons (S. Nong, D. Huang, Y. Li, R. Yang, J. Xie, J. Li, H. Huang, X. Liang, G. Li, Z. Lan, H. Liu, D. Huang, S. Xu, J. Guo, W. Zhou, J. Energy Storage, 2024, 81, 110296), metal-organic frameworks (Á. Bonilla, G.A. Ortega-Moreno, M.C. Bernini, J.L. Gómez-Cámer, L.I. Barbosa, Á. Caballero, J. Power Sources, 2024, 608, 234613), transition metal oxides (X. Liang, C.Y. Kwok, F. Lodi-Marzano, Q. Pang, M. Cuisinier, H. Huang, C.J. Hart, D. Houtarde, K. Kaup, H. Sommer, T. Brezesinski, J. Janek, L.F. Nazar, Adv. Energy Mater., 2016, 6, 1501636), and graphene (A. Licari, A. Benítez, J.L. Gómez-Cámer, R. Trócoli, Á. Caballero, Nanomater., 2024, 14, 489) are particularly noteworthy. Whereas these materials can retain polysulfides inside their pores to a certain extent, the materials cannot eliminate the dissolution of polysulfides using ether solvents. Besides, they often require complex synthesis processes and are limited in their scalability due to their high cost (M. He, X. Li, X. Yang, C. Wang, M.L. Zheng, R. Li, P. Zuo, G. Yin, X. Sun, Adv. Energy Mater., 2021, 11, 2101004).

Other types of materials based on the covalent union of polymeric structures and elemental sulfur effectively avoid the formation of high-order polysulfides, as they only undergo solid-state conversion reactions and are known as organosulfur materials (R. Mukkabla, M.R. Buchmeiser, J. Mater. Chem. A, 2020, 8, 5379-5394). Among these materials, sulfurated poly(norbomadiene) (Q. Du, A. Fox, M. Benedikter, J. Kappler, K. Küster, T. Acartürk, U. Starke, M.R. Buchmeiser, ACS Appl. Energy Mater., 2022, 5, 7642-7650), sulfurated poly(dicyclopentadiene)(Q. Du, A. Fox, M. Benedikter, J. Kappler, K. Küster, T. Acartürk, U. Starke, M.R. Buchmeiser, ACS Appl. Energy Mater., 2022, 5, 7642-7650), sulfurized polyacrylonitrile (J. Fanous, M. Wegner, M.B.M. Spera, M.R. Buchmeiser, J. Electrochem. Soc., 2013, 160, A1169-A1170), carbyne polysulfides (B. Duan, W. Wang, A. Wang, K. Yuan, Z. Yu, H. Zhao, J. Qiu, Y. Yang, J. Mater. Chem. A, 2013, 1, 13261**),** and graphdiyne-like porous organic frameworks (Y. Yi, W. Huang, X. Tian, B. Fang, Z. Wu, S. Zheng, M. Li, H. Ma, ACS Appl. Mater. Interfaces., 2021, 13, 59983-59992) stand out. However, in all these materials the sulfur loading is limited to approximately 50 wt.%, which is a downside to capacity and energy density (Q. Du, A. Fox, M. Benedikter, J. Kappler, K. Kiister, T. Acartiirk, U. Starke, M.R. Buchmeiser, ACSAppl. EnergyMater., 2022, 5, 7642-7650; J. Fanous, M. Wegner, M.B.M. Spera, M.R. Buchmeiser, J. Electrochem. Soc., 2013, 160, A1169-A1170).

Based on this state of the art, there is a need for cathode active materials for Li-S based batteries, which allow for the provision of even higher sulfur contents in the cathode active material. Also, there is a need for Li-S batteries, which do not suffer from the well-known shuttle effect issue of lithium-sulfur batteries and have a high capacity, good rate capability, long cycle life, and in these properties even outperform existing cathode active materials for Li-S batteries.

### Description of the Invention

In the investigations, which are underlying the present invention, it has been found that the use of vinyl aromatic polymers based on styrene, vinylpyridine or mixtures thereof allow for a binding of sulfur to the polymer in amounts of more than 50 wt.-%. In addition, the polymers, which have been identified herein, offer the further advantage that they can synthesized with easy methodology, and are particularly effective for use in lithium-sulfur batteries as they do not suffer from the shuttle effect and allow for the production of batteries with excellent electrochemical performance in terms of high capacity, good rate capability, and long cycle life.

Accordingly, in a first aspect the present invention concerns a sulfurized vinyl aromatic polymer for use as an active material in lithium-sulfur batteries, wherein, the vinyl aromatic polymer is based on styrene, vinylpyridine or mixtures thereof. Particularly preferred sulfurized vinyl aromatic polymer for use as cathode materials are sulfurized poly(styrene) (SPS) and sulfurized poly(vinylpyridine) (SPVP), and copolymers thereof, including respective block copolymers.

As has been noted above, the vinyl aromatic polymers of the invention allow for the incorporation of very high amounts of sulfur into the polymer is a way, that the sulfur cannot be extracted; thus, the cathode material remains stable when a battery comprising the same is cycled between a charged and discharged state.

The sulfurized vinyl aromatic polymer of the invention preferably has a sulfur content of 10 to 75 wt.-%, more preferably 30 to 72 wt.-%, even more preferably 40 to 70 wt.-%, even more preferably 50 to 65 wt.% and most preferably 55 to 65 wt.-%.

Suitable base polymers (i.e. e.g. poly(styrene) or poly(vinylpyridine)), which can be used for the production of the sulfurized vinyl aromatic polymers of the invention, are not particularly limited with regard to their weight, however, as a suitably weight a number-average molecular weight of from 5000 to 500000 g/mol, preferably from 25000 to 250000 g/mol, and most preferably of from 50000 to 200000 g/mol can be given. The respective molecular weight can be determined by gel-permeation chromatography (GPC) with use of appropriate standards. Suitable polymers in addition or in alternative thereto preferably have a polydispersity index in the range from 1.0 to 15, where a range of from 2.0 to 10.0 is more preferred and a range of from 2.5 to 4.5 is particularly preferred.

For use as a cathode active material, the sulfurized vinyl aromatic polymer is regularly in the form of a powder with a particle size in the range of about 50 µm such as from 40 to 70 µm. A respective powder can be produced e.g. by sieving via a sieve with appropriate mesh size. The particle size of the powder as given above is an average particle size as determined by laser diffraction according to DIN ISO 13320-2022.

As noted above, the sulfurized vinyl aromatic polymer of the invention can be produced by a simple process, which regularly only involves heating of the polymer starting material with elemental sulfur at elevated temperatures (i.e. more than 200°C). Both the polymers and sulfur are commercially available on the market. To avoid that the polymer is degraded or that the sulfur is oxidized under the processing condition, the mixture is usually heated under exclusion of oxygen. Particularly suitable heating conditions (where the reaction is sufficiently fast and the reaction product has a high content of bound sulfur) involve a heating in the presence of elemental sulfur to a temperature in the range of 300 to 600°C, preferably in the range of 350 and 550°C, and most preferably in the range of 400 and 500°C.

In the inventive process, the sulfurized vinyl aromatic polymer will usually be produced from a mixture of the vinyl aromatic starting polymer and elemental sulfur, wherein the elemental sulfur is used in a relevant excess to the vinyl aromatic starting polymer. Preferably, the ratio of sulfur to vinyl aromatic starting polymer is at least 5:1, more preferably in the range of 10:1 to 30:1 and even more preferably 20 ±2 :1. To isolate the sulfurized vinyl aromatic polymer from the excess of sulfur, the reaction mixture is processed appropriately, i.e. by Soxhlet extraction and/or by subjecting the reaction mixture to vacuum sublimation at appropriate conditions.

As noted above, to produce cathodes with a suitable surface area, it is expedient that polymer after the sulfurization is completed is ground to ~50 µm particle size and sieved with a 40 - 70 µm mesh sieve, preferably with a 63 µm mesh sieve.

In a particularly preferred embodiment, the process for the production of the inventive sulfurized vinyl aromatic polymer involves the following steps:
**Step 1:** Grinding the polymer of choice, e.g. poly(styrene) or poly(vinylpyridine), to an average particle size of 100-400 µm.
**Step 2:** Mixing an excess amount of sulfur with the polymer, typically an excess to 10- to 30-fold the weight of sulfur on the weight of the polymer, and preferably 20 ±2 -fold. This ratio can be altered, depending on the desired sulfur loading.
**Step 3**: Placing the mixture inside a high-temperature-resistant quartz tube, followed by evacuation, purging with nitrogen and heating to 150 °C for 3-4 hours under a stream of nitrogen (50 mL/min).
**Step 4:** Keeping the tube in the furnace for pre-activation at 200 °C for 3 hours under a stream of nitrogen (50 mL/min).
**Step 5:** Raising the temperature to 450 °C for 5 hours or at 400 °C for 5 hours for activation, followed by cooling to room temperature under a stream of nitrogen (50 mL/min). In this step, both temperature and time can be altered for a tailored sulfur loading.
**Step 6:** Removing excess sulfur by Soxhlet extraction using toluene for 72 hours or by vacuum sublimation for 12 hours at 1×10⁻⁴ bar at 130-140 °C followed by Soxhlet extraction using toluene for 12 hours.
**Step 7:** Drying the sulfurized polymer at 90 °C under vacuum overnight, followed by grinding to ~50 µm particle size and sieving with a 63 µm mesh sieve.

In a further aspect, the present application concerns a cathode for an electrochemical cell, wherein the cathode comprises a current collector and a sulfurized vinyl aromatic polymer as described above as a cathode active material or a cathode active material prepared according to the method as described above. The cathode further comprises a conductive additive and a binder as part of the active material layer.

The term "cathode active material" in this respect indicates that the sulfurized vinyl aromatic polymer is participating in redox reactions with the lithium ions, when the battery is charged and discharged, whereas the other constituents are only active as binders to consolidate the layer of cathode active material and as means to conduct electrons (i.e. the conductive additive and the current collector). The "active material layer" denotes the layer, which comprises the cathode active material, i.e. the constituents as mentioned above except for the current collector. As the active material layer also comprises the sulfurized vinyl aromatic polymer as an inventive element, a respective active material layer without a current collector is also disclosed herein as an embodiment of the invention.

In the active material layer, the ratio of the sulfurized vinyl aromatic polymer: conductive additive: binder is not subject to relevant limitations, except that the amount of sulfurized vinyl aromatic polymer (in wt.-%) will usually be higher than the respective amounts of conductive additive and binder. Preferably, the ratio of sulfurized polymer: conductive additive: binder is in the range of from 60:20:20 to 90:5:5, more preferably in a wt.% ratio of 65:15:20 to 80:10:10, and most preferably in a wt.% ratio of 70:15:15.

As binder, any binder material, which is used in lithium secondary batteries, can be used, where poly(vinylidene fluoride) (PVDF) or carboxymethylcellulose can be given as appropriate examples. Also, the conductive additive can be any conductive additive suitable for use in lithium secondary batteries, which include without limitation conductive carbon black, graphene oxide (GO), reduced graphene oxide (RGO), carbon nanotubes (CNTs), carbon dots (C-dots), conductive carbon fibers. Carbon black (C-65) is a particularly preferred conductive additive in this respect.

Also, the current collector is not subject to any relevant limitations, and any current collector suitable for lithium secondary batteries (i.e. which is battery grade), can be used. Preferred current collectors are carbon-coated copper foil, graphite foil, aluminum foil, stainless-steel foil, carbon-coated aluminum foil, gold foil, or platinum foil.

The inventive cathode is usually prepared by applying a respective mixture of the sulfurized vinyl aromatic polymer, conductive additive and binder, often in the form of a slurry in an appropriate solvent (e.g. NMP), on the current collector with a wet thickness in the range from 100 to 500 µm, preferably of from 300 to 400 µm, and most preferably about 400 µm. To provide the cathode, the solvent is then removed by appropriate drying, preferably at elevated temperature.

In a particularly preferred embodiment, the inventive cathode can be prepared or is a cathode, which has been prepared, by the following method:
**Step 1:** A slurry is prepared in *N*-methyl-2-pyrrolidone (NMP) using SPS or SPVP together with carbon black (C-65) as conducting additive and PVDF as binder, e.g. in a wt.% ratio of 60:20:20.
One can choose any other conducting additives like GO, RGO, CNTs, C-dots, conducting carbon fibers, etc. All components are mixed with a planetary centrifugal mixture machine (e.g. a Thinky ARM-310CE) for 10-20 minutes at 2000 rpm. The wt.-ratio of NMP to active material is preferably 15:1 or 13:1, or more preferably 10:1; for a proper slurry, it may change to another suitable ratio.
**Step 2:** The slurry is coated onto a battery-grade current collector, which can be a carbon-coated copper foil, a graphite foil, an aluminum foil, a stainless-steel foil, a carbon-coated aluminum foil, a gold foil, or a platinum foil. Preferably, the wet coating thickness is from 100 to 800 µm, more preferably from 200 to 600 µm, even more preferably about 300 -500 µm, most preferably 400 µm using doctor blading. The "wet thickness" here defines the thickness of the dispersion with a solvent, which suitably is used in the form of NMP. **Step 3:** The electrode is dried initially on the coating machine at 40 °C for 4 hrs. under vacuum and then placed in an oven at 60 °C for overnight. For better electrode performance, the drying temperature and time can be altered.

In a yet further aspect, the present invention concerns an electrochemical cell, which comprises a cathode as described above, lithium metal as an anode, one or more separators located between the cathode and anode, and an electrolyte containing Li⁺ ions. In the electrochemical cell, the separator is preferably a glass fiber separator or a polyolefin-based separator.

To be functional for charging and discharging, the electrochemical cell preferably further comprises an electrolyte containing Li⁺ ions, which suitably is a solution of lithium hexafluorophosphate (LiPF₆) (as an electrolyte salt) in a carbonate based solvent. In addition to the solvent and the electrolyte salt, the electrolyte may further contain one or more electrolyte additives.

Carbonate based solvents, which may be used in the electrolyte include in particular ethylene carbonate (EC), diethyl carbonate (DEC), ethyl methyl carbonate (EMC), dimethyl carbonate (DMC), 1,3-dioxolane (DIOX), tetraethylene glycol dimethyl ether (TEGDME), 1,2-dimethoxyethane (DME), or mixtures of more than one of these solvents. A preferred solvent for the inventive electrochemical cells is a 50:50 (v/v) mixture of EC and DEC.

The concentration of the electrolyte salt in the electrolyte is preferably in the range from 0.1 to 5 mol/L, more preferably in the range from 0.8 to 1.5 mol/L and even more preferably in the range of 1.0 to 1.2 mol/L. As a suitable additive, which may be used in the electrolyte of the inventive electrochemical cell, fluoroethylene carbonate (FEC) can be mentioned, which can be used in quantities of up to 10 wt-% on the total weight of the carbonate solvent or solvents.

In a particularly preferred embodiment, the inventive electrochemical cell can be prepared or is an electrochemical cell, which has been prepared by the following method:
**Step 1:** A 10 mm diameter disc-type electrode is punched out using a cathode puncher, e.g. with an average sulfur-loading of 1.3 mg. The sulfur loading is not restricted to 1.3 mg/cm² and may range from 1-4 mg/cm².
**Step 2:** Li-S cells are fabricated in CR2032 coin-cell cases inside an Ar-filled glove box having O₂ and H₂O levels < 0.1 ppm. Cells are fabricated from the prepared cathodes and 10 mm diameter disc-type battery grade Li metal foil as anode.
**Step 3:** The electrolyte is a solution of lithium hexafluorophosphate (LiPF₆) in carbonates with a 10 wt.% of electrolyte additive. There are no particular restrictions for the electrolyte and the lithium salt and can comprise lithium tetrafluoroborate, lithium bis(oxalato)borate, lithium difluoro(oxalato)borate, lithium bis(trifluoromethanesulfonyl)imide, lithium triflate, or lithium perchlorate. The solvents for the electrolyte can be selected from, but are not limited to, ethylene carbonate (EC), diethyl carbonate (DEC), dimethyl carbonate (DMC), 1,3-dioxolane (DIOX), tetraethylene glycol dimethyl ether (TEGDME), 1,2-dimethoxyethane (DME), or mixtures of more than one of these solvents mentioned. The preferred solvent is a 50:50 (v/v) mixture of EC and DEC. The concentration of the lithium salt in the electrolyte can vary from 0.1 to 5 mol/L and preferably is about 1 mol/L. Further, fluoroethylene carbonate (FEC) can be used as an additive with preferably 10 wt.% (FEC, Sigma Aldrich, Battery grade). An amount of 100 µL of electrolyte is added to each cell; however, this amount can be varied for better cell performance.
**Step 4:** A GF/C grade Whatman microfiber glass separator (Sigma Aldrich) with a pore size of 1.2 µm is employed as a separator between the anode and cathode inside the coin cell.

Whereas in the above, the production of an electrochemical cell in the format of a CR2032, the electrochemical cell can have any other appropriate dimension, e.g. an 18650 format. The skilled practitioner is readily capable to adjusted sizes, amounts or other production parameters in the above to the production of respective battery formats.

The inventive electrochemical cells are usually kept under open circuit voltage (OCV) conditions overnight for an effective and stable interaction between electrode and electrolyte before further use.

The electrochemical cell may suitably be activated by appropriate charge-discharge processing, e.g. with a discharge-charge rate of from C/10 to C/50, preferably C/30. Particularly preferably, the electrochemical cell is activated for a minimum of five GCD (= galvanostatic charge/discharge) cycles in the active potential window of 0.05 V to 3.0 V and especially 0.1 V to 3.0 V.

In a yet further aspect, the present invention concerns a battery or a battery pack, which comprises a sulfurized vinyl aromatic polymer as described above, a cathode active material, a cathode as described above or an electrochemical cell as described above.

In a yet further aspect, the present invention concerns the use of batteries or battery packs as in the above-mentioned aspect for the storage of electrical energy. Such use regularly includes a charging process of the battery or battery pack via an electrical current and a discharging process of the battery or battery pack. In this aspect, the battery or battery pack can be used to store and provide electrical energy for portable or handheld electronic devices such as cell phones or laptops, or stationary energy storage, in remote relay stations, ships, or airplanes. Alternatively, the battery or battery pack can be used in a vehicle, especially in electric vehicles or hybrid cars.

### Brief description of the Figures

**Figure 1****:** shows Formation cycles at C/30-rate of (a) SPS- and (b) SPVP-based Li-S cells.
**Figure 2****:** shows the results of rate capability studies of (a) SPS- and (b) SPVP-based Li-S cells at different C-rates.
**Figure 3****:** shows the long-term cycling life stability studies of (a) SPS- and (b) SPVP-based Li-S cells at C/2-rate.

In the following, the invention will be further explained by descriptive examples, which however should not be interpreted as limiting factors to the invention by any means.

### Examples

### Example 1: Synthesis of sulfurized poly(styrene) (SPS)

1.0 g poly(styrene) (*M_{w}* = 288,000 g/mol, D = 2.3) was mixed with ca. 20 g sulfur. The mixture was placed in a high-temperature resistant quartz tube and atmospheric air was removed by applying vacuum and purging with nitrogen. Then the tube was placed inside a high-temperature furnace and pre-heated to 200 °C at a heating rate of 5 °C /min and held at 200°C for 3 hrs. The temperature was raised to 450 °C at a heating rate of 4 °C /min and held at 450 °C for 5 hrs before the the tube was cooled to room temperature. The mixture was ground to a powder, and excess amount of sulfur was removed by applying vacuum (1 × 10⁻⁴ bar) at 130 °C for 12 hrs., followed by Soxhlet extraction in toluene for another 12 hrs. The material was further ground and sieved with a 63 µm mesh sieve, where the fraction passing the sieve was collected. The thus obtained SPS contained 62 wt. % of sulfur as determined by elemental analysis.

### Example 2: Synthesis of sulfurized poly(vinylpyridine) (SPVP)

1.0 g poly(vinylpyridine) (*M̅_̅{̅w̅}̅* = 490,000 g/mol, D = 6.5) was mixed with ca. 20 g sulfur. Then the tube was placed inside a high-temperature furnace and pre-heated to 200 °C at a heating rate of 5 °C /min and held at 200°C for 3 hrs. The temperature was raised to 400 °C at a heating rate of 4 °C /min and held at 400 °C for 5 hrs; then the tube was cooled to room temperature. The mixture was ground to powder, excess amount of sulfur was removed by applying a vacuum (1 × 10⁻⁴ bar) at 130 °C for 12 hrs. followed by Soxhlet extraction in toluene for another 12 hrs. The material was ground and sieved with a 63 µm mesh sieve. The thus obtained SPVP contained 60 wt. % of sulfur as determined by elemental analysis.

### Example 3: Li-S cell fabrication and evalutaion

### cathode preparation

A slurry was prepared in N-methyl-2-pyrrolidone (NMP) using the sulfurized polymer (SPS or SPVP), a conducting additive (carbon black C-65) and a binder (poly(vinylidene fluoride), PVDF) in a wt.% ratio of 70:15:15. The wt. ratio of NMP to active material was 10:1. The slurry was mixed in a planetary centrifugal mixture machine (Thinky ARM-310CE) for 10 minutes at 2000 rpm and then coated on carbon-coated Cu-foil (battery grade) with a wet coating thickness of 400 µm using doctor blading. The electrode was dried on the coating machine at 40 °C for 4 hrs. under vacuum and then placed in an oven at 60 °C overnight. For battery fabrication, 10 mm diameter disc-type electrodes were punched out using a cathode puncher. The average sulfur loading was 1.3 mg/cm².

### Cell production

Li-S cells were fabricated in CR2032 coin-cell cases inside an Ar-filled glove box having O₂ and H₂O levels < 0.1 ppm. Cells were fabricated from the prepared SPS- or SPVP-based cathodes and 10 mm diameter disc-type battery grade Li metal foil as anode using 1M LiPF₆ in a 1:1 (v:v) mixture of ethylene carbonate (EC) and diethyl carbonate (DEC) containing 10 wt.% FEC (Sigma Aldrich, Battery grade). 100 µL of electrolyte were added to each cell. A GF/C grade Whatman microfiber glass separator (Sigma Aldrich) with a pore size of 1.2 µm was employed as separator between the anode and cathode.

### Cell activation and formation cycles

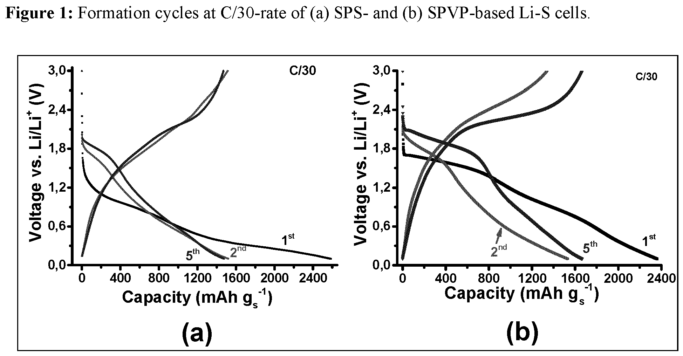

Cells were kept in OCV conditions overnight to ensure for an effective and stable interaction between the electrodes and the electrolyte. Then, the cells were connected to the battery cycler for electrochemical measurements. Prior to any electrochemical characterization, cells were activated at a C/30-rate for a minimum of five GCD cycles in the active potential window of 0.1 V to 3.0 V. The formation cycles of SPS- and SPVP cathode-based cells are shown in Figure 1a-b. Capacity values were calculated based on the amount of sulfur based on a theoretical capacity of sulfur of 1675 mAh g⁻¹.

### Rate capability studies

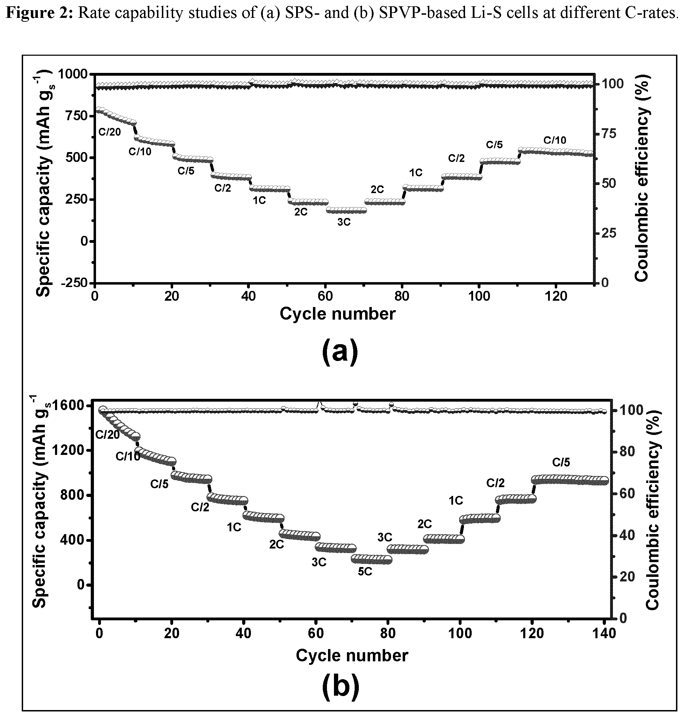

Activated coin cells were subjected to various current rates from C/20 to 5C rates. Then the cells were again cycled at lower current rates again (Figure 2a-b). SPS-based cells delivered capacities of 770, 600, 500, 390, and 315 mAh g⁻¹, while SPVP-based cells delivered capacities of 1400, 1150, 950, 760, and 600 mAh g⁻¹ at C/20, C/10, C/5, C/2, and 1C-rates, respectively.

### Long-term stability studies

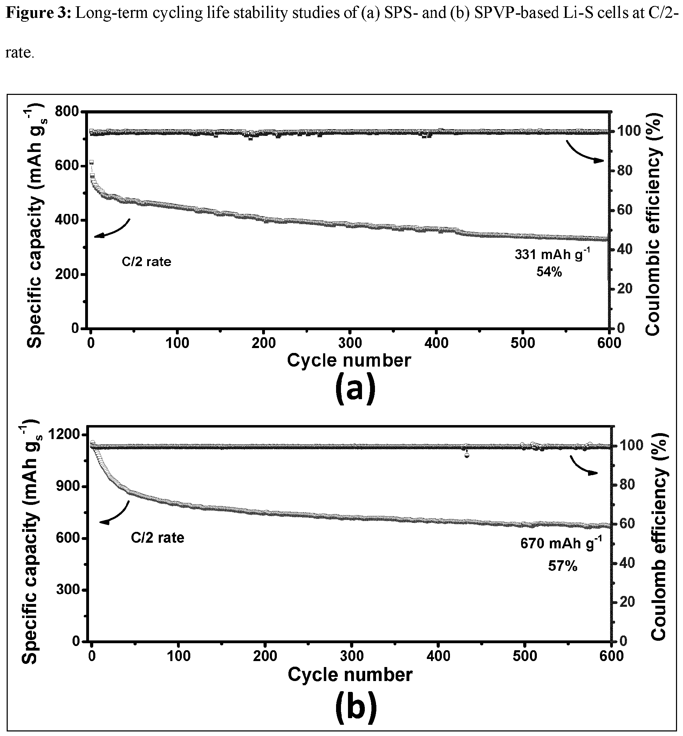

Coin cells with an average sulfur-loading of 1.3 mg/cm² were used for long-term stability tests at a C/2 rate. Long-term cycling of SPS-based cells showed 54% capacity retention after 600 cycles with >98% Coulombic efficiency (Figure 3a). SPVP-based cells displayed 57% capacity retention after 600 cycles by >98% Coulombic efficiency (Figure 3b).

## Claims

1. Sulfurized vinyl aromatic polymer for use as a cathode active material in lithium-sulfur batteries, wherein vinyl aromatic polymer is based on styrene, vinylpyridine or mixtures thereof.

2. Sulfurized vinyl aromatic polymer according to claim 1, wherein the sulfurized polymer is sulfurized poly(styrene) (SPS) or sulfurized poly(vinylpyridine) (SPVP).

3. Sulfurized vinyl aromatic polymer according to claim 1 or 2, **characterized in that** the sulfurized polymer has a sulfur content of 10 to 75 wt.%, preferably 40 to 70 wt.%, and most preferably 50 to 65 wt.-%.

4. Sulfurized vinyl aromatic polymer according to any one of claims 1 to 3, having a number-average molecular weight of from 5000 to 500000 g/mol, preferably from 25000 to 250000 g/mol, and most preferably of from 50000 to 200000 g/mol, and/or a polydispersity index of from 1.0 to 15, preferably of from 2.0 to 10.0, and most preferably of from 2.5 to 4.5.

5. Sulfurized vinyl aromatic polymer according to any one of claims 1 to 4, which is in the form of a powder with a particle size, as obtained by sieving, in the range von 40 to 70 µm.

6. Process for the production of a sulfurized vinyl aromatic polymer according to any one of claims 1 to 5, wherein the non-sulfurized vinyl aromatic polymer is reacted with an excess of sulfur at a temperature of more than 200°C to covalently bond the sulfur to the vinyl aromatic polymer.

7. Process according to claim 6, wherein a mixture the non-sulfurized vinyl aromatic polymer is heated in the presence of elemental sulfur to a temperature in the range of 300 to 600°C, preferably in the range of 350 and 550°C, and most preferably in the range of 400 and 500°C.

8. Process according to claim 6 and 7, wherein the sulfurized polymer is ground to ~50 µm particle size and sieved with a 40 - 70 µm mesh sieve, preferably with a 63 µm mesh sieve.

9. Cathode for an electrochemical cell comprising a current collector and a sulfurized vinyl aromatic polymer according to any one of claims 1 to 5 as a cathode material or a cathode material prepared according to the method in claims 6 to 8, wherein the cathode further comprises a conductive additive and a binder, preferably with a wt.% ratio of sulfurized polymer: conductive additive: binder of between 60:20:20 and 90:5:5, more preferably in a wt.% ratio of 65:15:20 to 80:10:10, and most preferably in a wt.% ratio of 70:15:15.

10. Cathode according to claim 9, **characterized in that** the binder is poly(vinylidene fluoride) (PVDF) or carboxymethylcellulose and that the conductive additive is graphene oxide (GO), reduced graphene oxide (RGO), carbon nanotubes (CNTs), carbon dots (C-dots), conductive carbon fibers, preferably carbon black (C-65) and/or **in that** the current collector is selected a carbon-coated copper foil, a graphite foil, an aluminum foil, a stainless-steel foil, a carbon-coated aluminum foil, a gold foil, or a platinum foil.

11. Cathode according to claim 9 or 10, **characterized in that** the cathode is prepared by coating a slurry of the sulfurized vinyl aromatic polymer, conductive additive and binder on a battery-grade current collector with a wet thickness of from 100 to 500 µm, preferably of from 300 to 400 µm, and most preferably about 350 µm.

12. Electrochemical cell comprising a cathode according to any one of claims 9 to 11, lithium metal as an anode, one or more separators located between the cathode and anode, and an electrolyte containing Li⁺ ions, wherein the separator is preferably a glass fiber separator or a polyolefin-based separator.

13. Electrochemical cell according to claim 12, **characterized in that** the electrolyte containing Li⁺ ions is a solution of lithium hexafluorophosphate (LiPF₆) in a carbonate based solvent, which optionally comprises one or more electrolyte additive.

14. Electrochemical cell according to claim 12 or 13, **characterized in that** the electrochemical cell has been activated at a discharge-charge rate of from C/10 to C/50, preferably C/30, preferably with one or more cycles of charging and discharging in a voltage window of 0.05-3.0 V, and in particular 0.1-3.0 V.

15. A battery or battery pack comprising a sulfurized vinyl aromatic polymer according to any one of claim 1 to 5 as a cathode active material, a cathode according to any one of claims 9 to 11 or an electrochemical cell according to any one of claims 12 to 14.

16. Use of the battery or battery pack according to claim 15 as an energy storage means, preferably in a car, an electrical vehicle, a hybrid car, portable equipment, or for local (stationary) energy storage, in remote relay stations, ships, or an aeroplane.
